# EUROPÄISCHE PATENTSCHRIFT

(11) **EP 2 708 760 B1**
(45) Veröffentlichungstag und Bekanntmachung des Hinweises auf die Patenterteilung: **27.05.2015**
(21) Anmeldenummer: 12006455.5
(22) Anmeldetag: 14.09.2012
(51) Int. Cl.: F16B 5/02, F16B 33/00, E04B 1/76

(54) **Dämmelement einer Wandankeranordnung**
Insulating element of a wall anchor assembly
Élément d'isolation d'un agencement d'ancrage mural

(43) Veröffentlichungstag der Anmeldung: 19.03.2014
(73) Patentinhaber: Hermes, Michael, 74394 Hessigheim (DE)
(72) Erfinder: Hermes, Michael, 74394 Hessigheim (DE)
(74) Vertreter: Wacker, Jost Oliver

(56) Entgegenhaltungen:
- EP-A1- 1 978 177
- DE-A1-102010 017 020

## Beschreibung

Die Erfindung betrifft ein Dämmelement für die Herstellung einer Wandankeranordnung zur wenigstens weitestgehend wärmebrückenfreien Befestigung eines Bauteils an einer wärmegedämmten Gebäudewand, nach dem Oberbegriff des Anspruchs 1 sowie eine Wandankeranordnung, die ein derartiges Dämmelement aufweist. Dieses Dämmelement weist einen ersten Gewindeabschnitt auf, der für die Herstellung einer Schraubverbindung mit einem an einem tragenden Teil der Gebäudewand festlegbaren Ankerelement geeignet ist. Zudem weist das Dämmelement einen zweiten Gewindeabschnitt auf, der für die Herstellung einer Schraubverbindung mit einem Lagerelement geeignet ist, an dem das Bauteil angebracht werden kann. Zwischen dem ersten Gewindeabschnitt und dem zweiten Gewindeabschnitt ist dabei ein Trennabschnitt vorgesehen, der eine Wärmeleitfähigkeit (λ_{20/50}) zwischen 0,2 und 1,2 W/(m x K) aufweist.

Aus DE 10 2007 016 236 B3 ist eine Anker-Dämmelement-Anordnung mit einem Ankerelement und einem Lagerelement bekannt, die über ein Dämmelement aus einem faserverstärkten Verbundwerkstoff verbunden sind. Das Ankerelement und das Lagerelement weisen hierzu jeweils eine stirnseitige Gewindebohrung auf, die mit Gewindeenden des Dämmelementes verschraubt werden können.

Die Aufgabe der Erfindung ist es, bei einem gattungsgemäßen Dämmelement die aufnehmbaren Lasten zu erhöhen, um einen vielseitigeren Einsatz zu ermöglichen.

Diese Aufgabe wird durch ein Dämmelement mit den Merkmalen des Anspruchs 1 gelöst. Dabei ist an das Gewindeteil im Bereich des Trennabschnittes ein aus einem zweiten Kunststoff hergestelltes Spritzelement angespritzt. Durch die Verwendung der verschiedenen Kunststoffe ist es dabei möglich, die Gewindeabschnitte und den Trennabschnitt, die im eingebauten Zustand unterschiedlich belastet sind und unterschiedlichen Funktionen dienen, mit unterschiedlichen Materialeigenschaften zu versehen, die an die jeweilige Belastung und Funktion angepasst sind.

Dabei ist es günstig, wenn die beiden Gewindeabschnitte des Gewindeteils durch den ersten Kunststoff gebildet sind und das Gewindeteil ferner ein Verbindungselement aufweist, das beide Gewindeabschnitte zugfest verbindet. Durch die Ausbildung der Gewindeabschnitte aus Kunststoff, kann dabei eine ausreichend verminderte Wärmeübertragung gewährleistet werden, während das Verbindungselement beispielsweise aus Metall hergestellt sein kann, um die anfallenden Zug- und Biegebeanspruchungen aufnehmen zu können.

Zudem ist es vorteilhaft, wenn das Gewindeteil durch ein durchgehendes Gewindeelement gebildet ist, das durch Umspritzen des Verbindungselementes mit dem ersten Kunststoff hergestellt ist und an dem das Spritzelement angespritzt ist. Insbesonders bei Verwendung eines Verbindungselementes aus Metall können auf diese Weise relativ hohe Zug- und Biegebeanspruchungen am Dämmelement aufgenommen werden.

Alternativ hierzu ist es von Vorteil, wenn das Gewindeteil durch ein durchgehendes Gewindeelement gebildet ist, das vollständig aus dem ersten Kunststoff hergestellt ist. Auf diese Weise kann das Dämmelement insgesamt sehr kostengünstig hergestellt werden.

Dabei ist es günstig, wenn wenigstens das Gewindeelement aus einem faserverstärkten Verbundwerkstoff hergestellt ist, um das Gewindeelement durch entsprechende Auswahl der Materialeigenschaften besonders gut an die im eingebauten Zustand zu erwartenden Belastungen, insbesondere hinsichtlich der aufzunehmenden Zug- und Biegekräfte, anpassen zu können.

In einer besonders vorteilhaften Ausführungsform ist das Gewindeelement hierfür aus einem langfaserigen Glasfaserverbundwerkstoff im Stranggussverfahren hergestellt, wodurch eine besonders hohe Zugfestigkeit des Dämmelementes erzielt werden kann, die wiederum die Aufnahme besonders hoher Lasten durch die Wandankeranordnung erlaubt.

Dabei ist es günstig, wenn der langfaserige Glasfaserverbundwerkstoff eine Matrix aus Polyester- oder Epoxidharz und einen Glasfaseranteil von über 60% aufweist, wodurch eine besonders hohe Zugfestigkeit von etwa 1000 N/mm² erreicht werden kann.

Vorteilhafterweise ist das Spritzelement aus einem kurzfaserigen Verbundwerkstoff hergestellt. Auf diese Weise kann das Spritzelement gegenüber dem Gewindeelement mit einer deutlich geringeren Wärmeleitfähigkeit versehen werden, um die Übertragung von Wärmeenergie vom Ankerelement zum Lagerelement möglichst weitgehend unterbinden und dadurch das Auftreten von schadhaften Wärmebrücken vermeiden zu können. Darüber hinaus kann das Spritzelement auf diese Weise gegenüber dem Gewindeelement eine höhere Elastizität aufweisen, um ein gewisses Verspannen des Lagerelementes und/oder des Ankerelementes mit dem Dämmelement zu ermöglichen.

Dabei ist es günstig, wenn der kurzfaserige Glasfaserverbundwerkstoff eine Matrix aus Polypropylen und einen gewissen Glasfaseranteil von beispielsweise 20 % aufweist, wodurch eine besonders geringe Wärmeleitfähigkeit des Dämmelementes zwischen Ankerelement und Lagerelement gewährleistet werden kann, die etwa zwischen 0,2 und 1,2 W/(m x K) liegt.

Ferner ist es günstig, wenn das Gewindeelement ein Außengewinde aufweist und das Spritzelement eine erste Ringschulter zur Begrenzung des ersten Gewindeabschnittes und eine zweite Ringschulter zur Begrenzung des zweiten Gewindeabschnittes bildet. Auf diese Weise können das Lagerelement und das Ankerelement jeweils über eine Ringfläche an dem Spritzelement in Anlage gebracht werden, was insbesondere bei Auswahl eines Materials des Spritzelementes mit gegenüber dem Gewindeelement erhöhter Druckfestigkeit eine besonders hohe Biegefestigkeit der Wandankeranordnung im Bereich des Dämmelementes gewährleistet.

Alternativ hierzu ist es günstig, wenn in das Gewindeelement an wenigstens einem Ende ein Innengewinde eingelassen ist und der Trennabschnitt durch zwischen dem Innengewinde und dem jeweils anderen Ende verbleibendes Material des Gewindeelementes gebildet ist. Auf diese Weise kann das Gewindeelement über den durch das Innengewinde gebildeten Gewindeabschnitt auch mit einem Außengewinde des Ankerelementes oder des Lagerelementes verbunden werden, was beispielsweise die Verwendung einer einfachen Gewindestange als Ankerelement ermöglicht.

Dabei ist es zudem vorteilhaft, wenn zumindest an einem Ende des Gewindeelementes sowohl das Außengewinde als auch das Innengewinde ausgebildet ist, um das Dämmelement zumindest an diesem Ende wahlweise mit einem Außengewinde als auch mit einem Innengewinde verbinden zu können.

Ferner wird die oben genannte Aufgabe durch eine Wandankeranordnung gelöst, die ein Ankerelement und ein Lagerelement aufweist, die über ein Dämmelement gemäß einer der oben genannten Ausführungsformen miteinander verbunden sind, wobei das Ankerelement und das Lagerelement jeweils ein Innengewinde aufweisen, mittels dem sie mit dem Gewindeteil verbunden sind, wodurch eine einfache und stabile Verbindung von Lagerelement und Ankerelement mit dem jeweiligen Gewindeabschnitt des Gewindeteils des Dämmelementes möglich ist.

Dabei ist es in jedem Fall günstig, wenn das Ankerelement und das Lagerelement am jeweiligen freien Ende des Innengewindes eine Ringfläche ausbilden, die gegen die erste Ringschulter und die zweite Ringschulter des Dämmelementes gepresst sind. Durch diese Anlage der jeweiligen Ringfläche des Ankerelementes und des Lagerelementes an der entsprechenden Ringschulter des Dämmelementes ist ringförmig um das Gewindeteil herum eine Übertragung von hohen Druckspannungen zwischen dem Lager- beziehungsweise Ankerelement und dem Dämmelement möglich, was wiederum die Biegefestigkeit der Wandankeranordnung insgesamt erhöht.

Alternativ hierzu ist es günstig, wenn im Falle eines durch ein Innengewinde gebildeten Gewindeabschnittes des Gewindeteils das Ankerelement und/oder das Lagerelement am jeweiligen freien Ende ein Außengewinde ausbilden, das durch eine Ringschulter begrenzt ist, die mit dem Innengewinde gegen das Gewindeteil gepresst ist.

In den Figuren ist eine beispielhafte Ausführungsform der Erfindung dargestellt. Es zeigen:
- Figur 1: eine geschnittene Ansicht einer Wandankeranordnung mit einem erfindungsgemäßen Dämmelement im eingebauten Zustand,
- Figur 2: eine perspektivische Ansicht der Wandankeranordnung gemäß Fig. 1 im getrennten Zustand,
- Figur 3: eine perspektivische Ansicht der Wandankeranordnung im verbundenen Zustand,
- Figur 4: einen Längsschnitt durch das Dämmelement,
- Figur 5: eine Draufsicht auf das Dämmelement gemäß Fig 4,
- Figur 6: einen Längsschnitt durch eine alternative Ausführungsform des Dämmelementes mit durch Innengewinde gebildeten Gewindeabschnitten,
- Figur 7: einen Längsschnitt durch eine weitere alternative Ausführungsform des Dämmelementes mit Innen- und Außengewinden an den Gewindeabschnitten,
- Figur 8: einen Längsschnitt durch eine weitere alternative Ausführungsform des Dämmelementes mit Gewindeabschnitten, die über ein Verbindungselement verbunden sind und
- Figur 9: einen Längsschnitt durch eine weitere alternative Ausführungsform des Dämmelementes, bei dem das Verbindungselement in ein durchgehendes Gewindeelement eingebettet ist.

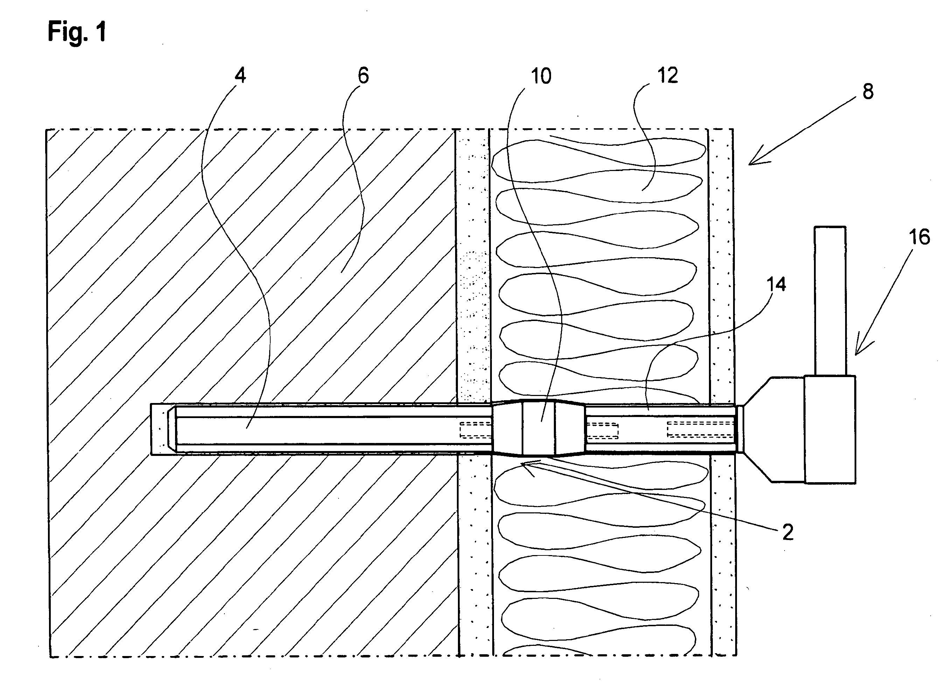

Fig. 1 zeigt eine Wandankeranordnung 2 mit einem Ankerelement 4, das an einem tragenden Teil 6 einer Gebäudewand 8 mittels eines Mörtels oder Klebers dauerhaft befestigt ist, und einem am Ankerelement 4 festgeschraubten Dämmelement 10, das aus faserverstärktem Verbundwerkstoff gebildet ist.

Das Dämmelement 10 ist hierbei an dem Ankerelement 4 angeschraubt und innerhalb einer Dämmschicht 12 der Gebäudewand 8 angeordnet, um die Ausbildung einer Wärmebrücke zwischen dem Ankerelement 4 und einem Lagerelement 14 zu verhindern. Dieses Lagerelement 14 dient hierbei zur Befestigung eines Bauteils 16 an der Gebäudewand 8 und ist an einer vom Ankerelement 4 abgewandten Seite des Dämmelementes 10 mit diesem verschraubt.

Zur Vermeidung der Ausbildung einer Wärmebrücke weist das Dämmelement 10 eine Wärmeleitfähigkeit λ_{20/50} von höchstens 1,2 W/(m x K) auf. Das Bauteil 16 ist dabei beispielhaft durch einen Schraubkloben gebildet, der zur Befestigung eines Fensterladens (nicht dargestellt) dient. Das Bauteil 16 ist über das Lagerelement 14 insgesamt an dem auf Höhe der Dämmschicht 12 angeordneten Dämmelement 10 gehalten.

Bei entsprechender Länge des Dämmelementes 10 beziehungsweise entsprechender Breite der Dämmschicht 12 wäre alternativ zu der dargestellten Verwendung des Lagerelementes 14 auch eine direkte Befestigung des Schraubklobens oder eines sonstigen Bauteils 16 am Dämmelement 10 denkbar. In diesem Fall würde dann das Bauteil 16 gleichzeitig auch das Lagerelement 14 bilden (nicht dargestellt).

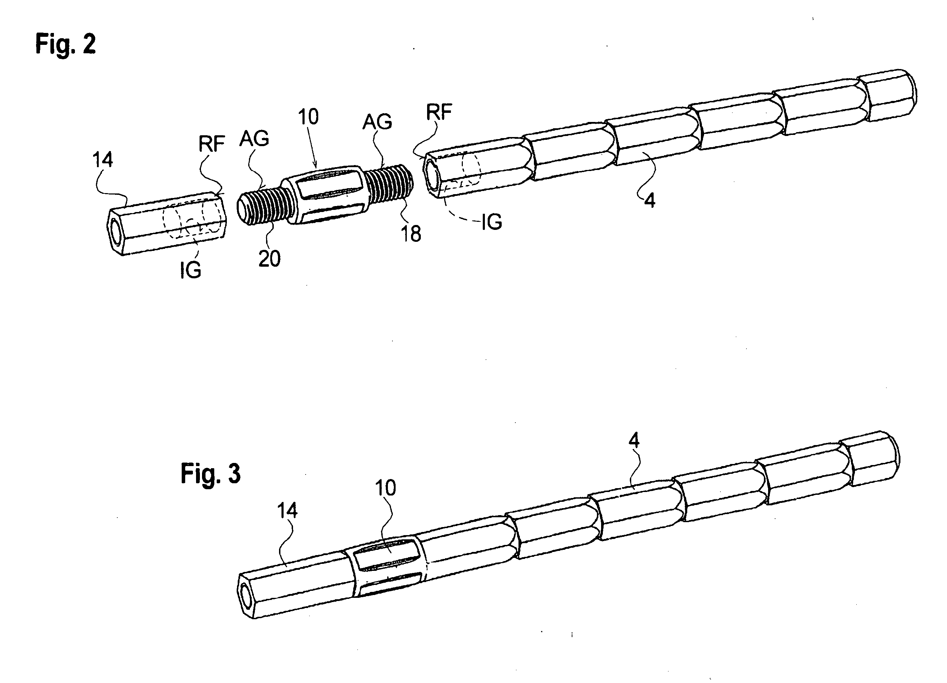

Wie insbesondere aus den Fig. 2 und 3 zu entnehmen ist, weist das Dämmelement 10 zur Herstellung einer jeweiligen Schraubverbindung einen ersten Gewindeabschnitt 18 mit einem Außengewinde AG, das mit einem in das Ankerelement 4 eingelassenen Innengewinde IG verschraubbar ist, und einen ebenfalls mit einem Außengewinde AG versehenen zweiten Gewindeabschnitt 20 auf, der mit einem in das Lagerelement 14 eingelassenen Innengewinde IG verschraubbar ist.

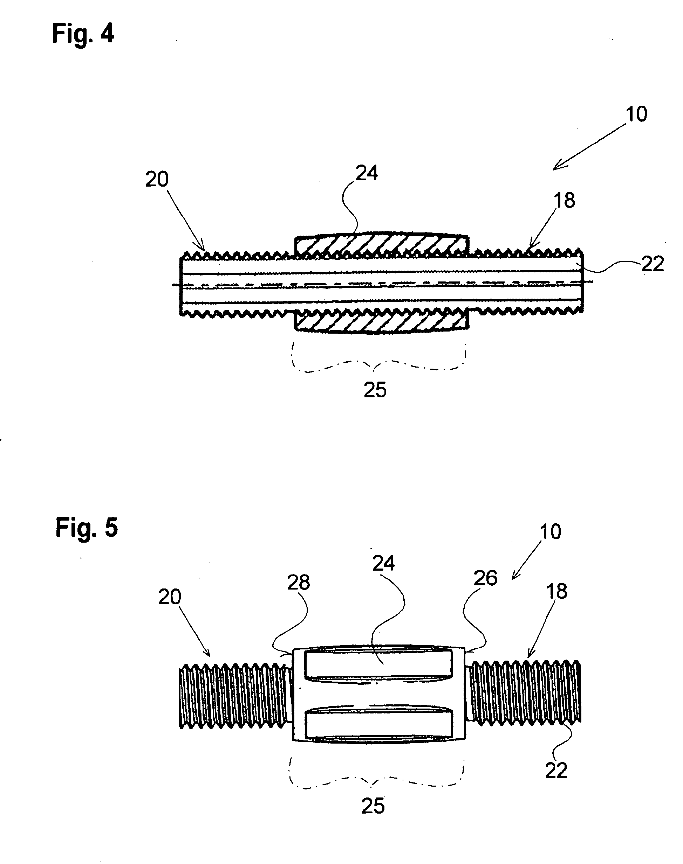

Wie aus Fig. 4 zu entnehmen ist, sind der erste Gewindeabschnitt 18 und der zweite Gewindeabschnitt 20 hierbei durch ein Gewindeteil in Form eines einzigen, durchgehenden Gewindeelementes 22 gebildet, das beispielsweise als Gewindestange im Pultrusionsverfahren hergestellt ist. Auf dieses Gewindeelement 22 ist, wie insbesondere aus den Fig. 4 und 5 zu entnehmen ist, ein Spritzelement 24 aufgespritzt, das mit einer ersten Ringschulter 26 den ersten Gewindeabschnitt 18 und mit einer zweiten Ringschulter 28 den zweiten Gewindeabschnitt 20 begrenzt und dazwischen einen Trennabschnitt 25 des Dämmelementes 10 bildet.

Beim Verschrauben des Dämmelementes 10 mit dem Ankerelement 4 und dem Lagerelement 14 kommen diese über jeweils eine Ringfläche RF, die an dem jeweiligen dem Dämmelement 10 zugewandten freien Ende durch das jeweils stirnseitig eingelassene Innengewinde IG gebildet ist, mit den Ringschultern 26, 28 in Anschlag, wie aus Fig. 2 und 3 zu entnehmen ist.

Um hierbei die im eingebauten Zustand am Gewindeelement 22 und am Spritzelement 24 auftretenden unterschiedlichen Lasten besonders gut abtragen zu können, sind beide Elemente aus unterschiedlichen Kunststoffen gebildet. Das Gewindeelement 22 ist dabei aus einem besonders zugfesten langfaserigen Glasfaserverbundwerkstoff hergestellt. Vorzugsweise weist dieser Glasfaserverbundwerkstoff dabei eine Matrix aus einem halogenfreien Isophtalsäure-Polyesterharz und einen Glasfaseranteil von über 60% auf.

Das Spritzelement 24 ist dagegen aus einem kurzfaserigen Glasfaserverbundwerkstoff gebildet, der beispielsweise eine Matrix aus Polypropylen und einen Glasfaseranteil von etwa 20 % aufweist. Hierdurch kann eine besonders geringe Wärmeleitfähigkeit λ_{20/50} von höchstens 1,2 W/(m x K) und eine gewisse Elastizität gewährleistet werden, die eine feste Verbindung des Ankerelementes 4 und des Lagerelementes 14 mit dem Gewindeelement 22 ermöglicht.

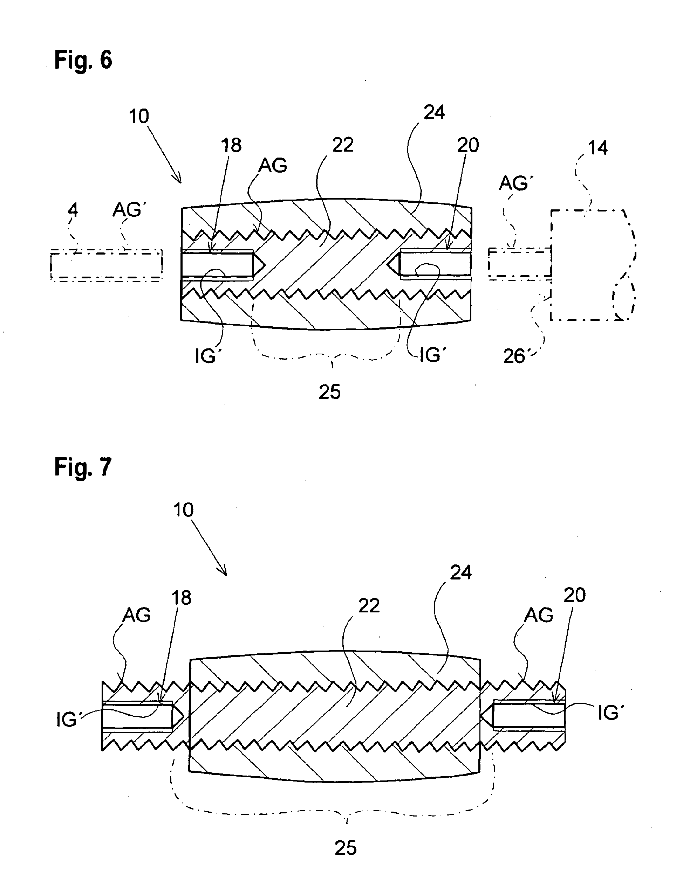

In einer alternativen Ausführungsform des Dämmelementes 10 ist das durchgehenden Gewindeelemente 22 an beiden Enden mit einem Innengewinde IG' versehen (siehe Fig. 6), die hier den ersten und zweiten Gewindeabschnitt (18, 20) bilden. Die Verbindung mit dem Ankerelement 4 und dem Lagerelement 14 erfolgt, wie durch strichpunktierte Linien dargestellt, über an diesen vorgesehene Außengewinde AG'. Wie dabei beispielhaft für das Lagerelement 14 dargestellt, kann dabei eine Ringschulter 26' vorgesehen werden, die beim Herstellen der Schraubverbindung mit dem Dämmelement 10 in Anschlag kommt.

Das Spritzelement 24 dient in diesem Fall zur zusätzlichen Aussteifung des durchgehenden Gewindeelementes 22, das zur stabilen Verbindung mit dem Spritzelement 24 auch hier ein Außengewinde AG aufweist. Alternativ hierzu wäre es jedoch auch denkbar, das Gewindeelement 22 mit einer weitestgehend glatten Außenseite zu verwenden oder lediglich bereichsweise Verzahnungskonturen vorzusehen (nicht dargestellt).

In einer zweiten alternativen Ausführungsform des Dämmelementes 10 kann gemäß Fig. 7 zudem vorgesehen werden, dass an wenigstens einem Ende des Gewindeelementes 22 sowohl das Außengewinde AG als auch das Innengewinde IG' zur Herstellung einer Schraubverbindung zur Verfügung steht, um dieses mit dem Ankerelement 4 und/oder dem Lagerelement 14 zu verbinden.

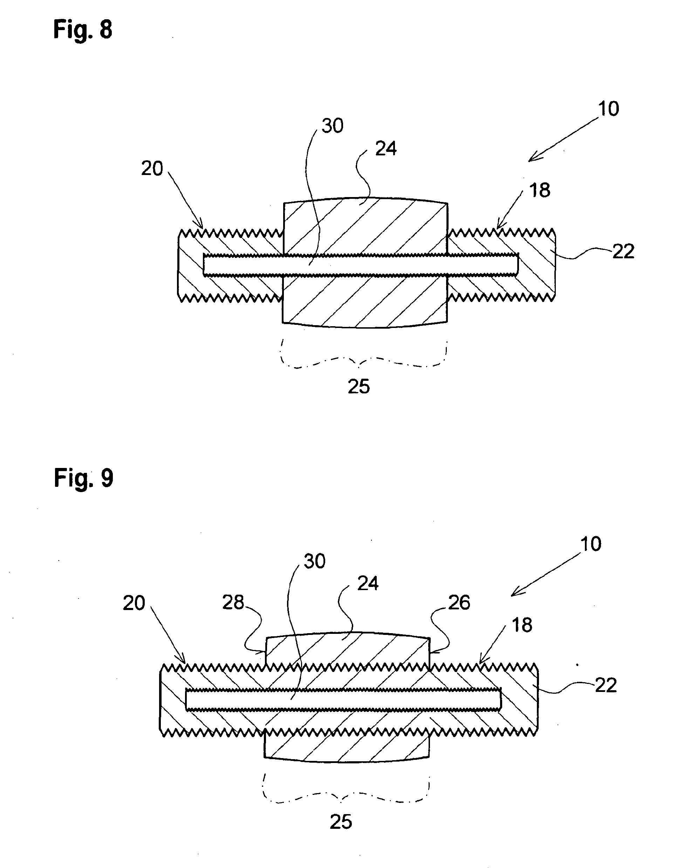

Fig. 8 zeigt eine dritte alternative Ausführungsform des Dämmelementes 10, bei dem die beiden Gewindeabschnitte 18, 20 ebenfalls aus dem zugfesten langfaserigen Glasfaserverbundwerkstoff hergestellt sind. Die beiden Gewindeabschnitte 18, 20 sind dabei jedoch nicht durch ein einstückiges, durchgehendes Gewindeteil gebildet, sondern durch ein Gewindeteil, an dem die Gewindeabschnitte 18, 20 voneinander beabstandet gehalten und über ein Verbindungselement 30 miteinander verbunden. Das Verbindungselement 30 kann dabei beispielsweise durch eine Metallgewindestange gebildet sein, an deren beiden Enden die Gewindeabschnitte 18, 20 angebracht sind. Zwischen den beiden Gewindeabschnitten 18, 20 ist dabei der Trennabschnitt 25 ausgebildet, in dem das Spritzelement 24 angespritzt ist.

Fig. 9 zeigt eine vierte alternative Ausführungsform des Dämmelementes 10, bei der der erste Gewindeabschnitt 18 und der zweite Gewindeabschnitt 20 entsprechend der Ausführungsform nach Fig. 4 durch ein Gewindeteil in Form eines einzigen, durchgehenden Gewindeelementes 22 gebildet sind. Das Gewindeelement 22 ist dabei durch eine Gewindestange gebildet, die durch Umspritzen des Verbindungselementes 30 mit einem langfaserigen Glasfaserverbundwerkstoff hergestellt ist. Auf dieses Gewindeelement 22 ist wiederum ein Spritzelement 24 aufgespritzt, das mit einer ersten Ringschulter 26 den ersten Gewindeabschnitt 18 und mit einer zweiten Ringschulter 28 den zweiten Gewindeabschnitt 20 begrenzt und dazwischen einen Trennabschnitt 25 des Dämmelementes 10 bildet.

Das Verbindungselement 30 kann auch bei dieser Ausführungsform durch ein besonders zug- und biegefestes Material, wie beispielsweise Metall hergestellt sein, um die Stabilität des Dämmelementes 10 insgesamt zu erhöhen.

## Patentansprüche

1. Dämmelement (10) für die Herstellung einer Wandankeranordnung (2) zur Befestigung eines Bauteils (16) an einer wärmegedämmten Gebäudewand (8)
mit einem ersten Gewindeabschnitt (18) für die Herstellung einer Schraubverbindung mit einem an einem tragenden Teil (6) der Gebäudewand (8) festlegbaren Ankerelement (4),
mit einem zweiten Gewindeabschnitt (20) für die Herstellung einer Schraubverbindung mit einem zur Anbringung des Bauteils (16) dienenden Lagerelement (14) und
mit einem zwischen dem ersten Gewindeabschnitt (18) und dem zweiten Gewindeabschnitt (20) vorgesehenen Trennabschnitt (25),
wobei die beiden Gewindeabschnitte (18, 20) durch ein Gewindeteil gebildet sind, das zumindest teilweise aus einem ersten Kunststoff hergestellt ist,
**dadurch gekennzeichnet, dass** an das Gewindeteil im Bereich des Trennabschnittes (25) ein aus einem zweiten Kunststoff hergestelltes Spritzelement (24) angespritzt ist.

2. Dämmelement nach Anspruch 1, **dadurch gekennzeichnet, dass** die beiden Gewindeabschnitte (18, 20) des Gewindeteils durch den ersten Kunststoff gebildet sind und das Gewindeteil ferner ein Verbindungselement (30) aufweist, das beide Gewindeabschnitte (18, 20) zugfest verbindet.

3. Dämmelement nach Anspruch 2, **dadurch gekennzeichnet, dass** das Gewindeteil durch ein durchgehendes Gewindeelement (22) gebildet ist, das durch Umspritzen des Verbindungselementes (30) mit dem ersten Kunststoff hergestellt ist und an dem das Spritzelement (24) angespritzt ist.

4. Dämmelement nach Anspruch 1, **dadurch gekennzeichnet, dass** das Gewindeteil durch ein durchgehendes Gewindeelement (22) gebildet ist, das vollständig aus dem ersten Kunststoff hergestellt ist.

5. Dämmelement nach Anspruch 4, **dadurch gekennzeichnet, dass** wenigstens das Gewindeelement (22) aus einem faserverstärkten Verbundwerkstoff hergestellt ist.

6. Dämmelement nach Anspruch 5, **dadurch gekennzeichnet, dass** das Gewindeelement (22) aus einem langfaserigen Glasfaserverbundwerkstoff im Stranggussverfahren hergestellt ist.

7. Dämmelement nach Anspruch 6, **dadurch gekennzeichnet, dass** der langfaserige Glasfaserverbundwerkstoff eine Matrix aus Polyester- oder Epoxidharz und einen Glasfaseranteil von über 60% aufweist.

8. Dämmelement nach einem der Ansprüche 1 bis 7, **dadurch gekennzeichnet, dass** das Spritzelement (24) aus einem kurzfaserigen Verbundwerkstoff hergestellt ist.

9. Dämmelement nach Anspruch 8, **dadurch gekennzeichnet, dass** der kurzfaserige Glasfaserverbundwerkstoff eine Matrix aus Polypropylen und Glasfasern aufweist.

10. Dämmelement nach einem der Ansprüche 4 bis 7, **dadurch gekennzeichnet, dass** das Gewindeelement (22) ein Außengewinde (AG) aufweist und das Spritzelement (24) eine erste Ringschulter (26) zur Begrenzung des ersten Gewindeabschnittes (18) und eine zweite Ringschulter (28) zur Begrenzung des zweiten Gewindeabschnittes (20) aufweist.

11. Dämmelement nach einem der Ansprüche 4 bis 7, **dadurch gekennzeichnet, dass** in das Gewindeelement (22) an wenigstens einem Ende ein Innengewinde (IG') eingelassen ist und der Trennabschnitt (25) durch zwischen dem Innengewinde (IG') und dem jeweils anderen Ende verbleibendes Material des Gewindeelementes (22) gebildet ist.

12. Dämmelement nach Anspruch 10 oder 11, **dadurch gekennzeichnet, dass** an wenigstens einem Ende des Gewindeelementes (22) sowohl das Außengewinde (AG) als auch das Innengewinde (IG') ausgebildet ist.

13. Wandankeranordnung (2) mit einem Ankerelement (4) und einem Lagerelement (14) die über ein Dämmelement (10) gemäß einem der Ansprüche 1 bis 12 miteinander verbunden sind, **dadurch gekennzeichnet, dass** das Ankerelement (4) und das Lagerelement (14) jeweils ein Gewinde aufweisen, mittels dem sie mit dem Gewindeteil verbunden sind.

14. Wandankeranordnung nach Anspruch 13 **dadurch gekennzeichnet, dass** das Ankerelement (4) und das Lagerelement (14) am jeweiligen freien Ende des Innengewindes (IG) eine Ringfläche (RF) ausbilden, die im verbundenen Zustand der Wandankeranordnung (2) gegen die erste Ringschulter (26) und die zweite Ringschulter (28) des Dämmelementes (10) gepresst ist.

15. Wandankeranordnung nach Anspruch 13 **dadurch gekennzeichnet, dass** das Ankerelement (4) und/oder das Lagerelement (14) am jeweiligen freien Ende ein Außengewinde (AG') ausbilden, das durch eine Ringschulter (26') begrenzt ist, die im verbundenen Zustand des Außengewindes (AG') mit dem Innengewinde (IG') gegen das Gewindeteil gepresst ist.

## Claims

1. Insulating element (10) to make a wall anchor assembly (2) for securing a component (16) on a heat-insulated building wall (8)
with a first threaded section (18) to make a screw connection to an anchor element (4) which can be affixed to a load-bearing part (6) of the building wall (8),
with a second threaded section (20) to make a screw connection to a bearing element (14) serving to attach the component (16) and
with a dividing section (25) provided between the first threaded section (18) and the second threaded section (20),
wherein the two threaded sections (18, 20) are formed by one threaded part which is made at least partially of a first plastic,
**characterised in that** a spray element (24) made of a second plastic is sprayed onto the threaded part in the area of the dividing section (25),

2. Insulating element according to claim 1, **characterised in that** the two threaded sections (18, 20) of the threaded part are made of the first plastic and the threaded part furthermore has a connecting element (30) which connects the two threaded sections (18, 20) with a high tensile strength.

3. Insulating element according to claim 2, **characterised in that** the threaded part is formed by a continuous threaded element (22) which is made by overmoulding the connecting element (30) with the first plastic and on which the spray element (24) is sprayed.

4. Insulating element according to claim 1, **characterised in that** the threaded part is formed by a continuous threaded element (22) which is completely made of the first plastic.

5. Insulating element according to claim 4, **characterised in that** at least the threaded element (22) is made of a fibre-reinforced composite material.

6. Insulating element according to claim 5, **characterised in that** the threaded element (22) is made of a long-stranded glass-fibre composite material in the continuous casting process.

7. Insulating element according to claim 6, **characterised in that** the long-stranded glass-fibre composite material has a matrix of polyester or epoxy resin and a glass-fibre content of over 60%.

8. Insulating element according to one of the claims 1 to 7, **characterised in that** the spray element (24) is made of a short-stranded composite material.

9. Insulating element according to claim 8, **characterised in that** the short-stranded glass-fibre composite material has a matrix of polypropylene and glass-fibre.

10. Insulating element according to one of the claims 4 to 7, **characterised in that** the threaded element (22) has an external thread (AG) and the spray element (24) has a first annular shoulder (26) to delimit the first threaded section (18) and a second annular shoulder (28) to delimit the second threaded section (20).

11. Insulating element according to one of the claims 4 to 7, **characterised in that** an internal thread (IG') is let into the threaded element (22) on at least one end, and the dividing section (25) is formed by material of the threaded element (22) remaining between the internal thread (IG') and the other end in each case.

12. Insulating element according to claim 10 or 11, **characterised in that** both the external thread (AG) and also the internal thread (IG') is made on at least one end of the threaded element (22).

13. Wall anchor assembly (2) with an anchor element (4) and a bearing element (14) which are connected to each other by means of an insulating element (10) according to one of the claims 1 to 12, **characterised in that** the anchor element (4) and the bearing element (14) each have a thread by means of which they are connected to the threaded part.

14. Wall anchor assembly according to claim 13, **characterised in that** the anchor element (4) and the bearing element (14) form an annular surface (RF) on the in each case free end of the internal thread (IG), wherein said annular surface in the connected state of the wall anchor assembly (2) is pressed against the first annular shoulder (26) and the second annular shoulder (28) of the insulating element (10).

15. Wall anchor assembly according to claim 13, **characterised in that** the anchor element (4) and / or the bearing element (14) form an external thread (AG') on the in each case free end, wherein said external thread is delimited by an annular shoulder (26') which in the connected state of the external thread (AG') to the internal thread (IG') is pressed against the threaded part.

## Revendications

1. Elément isolant (10) pour construire un ensemble d'ancrage de paroi (2) pour la fixation d'un composant (16) sur une paroi de bâtiment isolée thermiquement (8)
comprenant une première portion filetée (18) pour établir une liaison vissée avec un élément d'ancrage (4) qui peut être fixé à une partie portante (6) de la paroi de bâtiment (8),
comprenant une seconde portion filetée (20) pour établir une liaison vissée avec un élément porteur (14) servant pour le montage du composant (16) et
comprenant une portion de séparation (25) prévue entre la première portion filetée (18) et la seconde portion filetée (20),
les deux portions filetées (18, 20) étant formées par une partie filetée qui est fabriquée au moins partiellement en un premier matériau plastique,
**caractérisé en ce qu'**un élément d'injection (24) fabriqué en un second matériau plastique est moulé par injection sur la partie filetée dans la zone de la portion de séparation (25).

2. Elément isolant selon la revendication 1, **caractérisé en ce que** les deux portions filetées (18, 20) de la partie filetée sont formées par le premier matériau plastique et la partie filetée présente en outre un élément de liaison (30), qui relie fixement en traction les deux portions filetées (18, 20).

3. Elément isolant selon la revendication 2, **caractérisé en ce que** la partie filetée est formée par un élément fileté continu (22), qui est fabriqué avec le premier matériau plastique par injection autour de l'élément de liaison (30) et sur lequel l'élément d'injection (24) est moulé par injection.

4. Elément isolant selon la revendication 1, **caractérisé en ce que** la partie filetée est formée par un élément fileté continu (22), qui est entièrement fabriqué à partir du premier matériau plastique.

5. Elément isolant selon la revendication 4, **caractérisé en ce qu'**au moins l'élément fileté (22) est fabriqué en un matériau composite renforcé de fibres.

6. Elément isolant selon la revendication 5, **caractérisé en ce que** l'élément fileté (22) est fabriqué en un matériau composite de fibres de verre à fibres longues par procédé de coulée continue.

7. Elément isolant selon la revendication 6, **caractérisé en ce que** le matériau composite de fibres de verre à fibres longues présente une matrice en résine de polyester ou époxy et une teneur en fibres de verre de plus de 60%.

8. Elément isolant selon l'une quelconque des revendications 1 à 7, **caractérisé en ce que** l'élément d'injection (24) est fabriqué en un matériau composite à fibres courtes.

9. Elément isolant selon la revendication 8, **caractérisé en ce que** le matériau composite de fibres de verre à fibres courtes présente une matrice en polypropylène et fibres de verre.

10. Elément isolant selon l'une quelconque des revendications 4 à 7, **caractérisé en ce que** l'élément fileté (22) présente un filetage extérieur (AG) et l'élément d'injection (24) présente un premier épaulement annulaire (26) pour délimiter la première portion filetée (18) et un second épaulement annulaire (28) pour délimiter la seconde portion filetée (20).

11. Elément isolant selon l'une quelconque des revendications 4 à 7, **caractérisé en ce qu'**un filetage interne (IG') est usiné dans l'élément fileté (22) à au moins une extrémité et la portion de séparation (25) est formée par de la matière de l'élément fileté (22) restante entre le filetage interne (IG') et l'autre extrémité respective.

12. Elément isolant selon la revendication 10 ou 11, **caractérisé en ce qu'**à au moins une extrémité de l'élément fileté (22) sont réalisés à la fois, le filetage extérieur (AG) et le filetage interne (IG').

13. Ensemble d'ancrage de paroi (2) comprenant un élément d'ancrage (4) et un élément porteur (14), qui sont reliés l'un à l'autre par l'intermédiaire d'un élément isolant (10) selon l'une quelconque des revendications 1 à 12, **caractérisé en ce que** l'élément d'ancrage (4) et l'élément porteur (14) présentent chacun un filetage au moyen duquel ils sont reliés à la partie filetée.

14. Ensemble d'ancrage de paroi selon la revendication 13, **caractérisé en ce que** l'élément d'ancrage (4) et l'élément porteur (14) forment à l'extrémité libre respective du filetage intérieur (IG), une surface annulaire (RF) qui dans un état relié de l'ensemble d'ancrage de paroi (2) est pressée contre le premier épaulement annulaire (26) et le deuxième épaulement annulaire (28) de l'élément isolant (10).

15. Ensemble d'ancrage de paroi selon la revendication 13, **caractérisé en ce que** l'élément d'ancrage (4) et/ou l'élément porteur (14) forment à l'extrémité libre respective un filetage extérieur (AG') délimité par un épaulement annulaire (26') qui, à l'état relié du filetage extérieur (AG') avec le filetage intérieur (IG), est pressé contre la partie filetée.
